Europäisches Patentamt

European Patent Office

Office européen des brevets

(11) Publication number: **0 163 499**
**A2**

(12) # EUROPEAN PATENT APPLICATION

(21) Application number: 85303672.1

(22) Date of filing: 24.05.85

(51) Int. Cl.⁴: **A 61 C 13/00**

(30) Priority: 25.05.84 GB 8413393
25.05.84 GB 8413394

(43) Date of publication of application:
04.12.85 Bulletin 85/49

(84) Designated Contracting States:
AT BE CH DE FR IT LI NL SE

(71) Applicant: Knott, Nigel James
40, New Road
Chippenham Wiltshire SN15 1HL(GB)

(72) Inventor: Knott, Nigel James
40, New Road
Chippenham Wiltshire SN15 1HL(GB)

(54) Injection or transfer moulding.

(57) An injection method for moulding denture plates uses a mould formed of a pair of stones with embedded replica teeth the stones being formed themselves in a chamber defined between a pair of relatively good thermally conductive (5, 6) spaced apart by a body (1, 2) of relatively lower thermal conductivity, the body having a neck (13, 14) which carries an injection cylinder housing (17), the method including initial polymerisation of pressure injected mixture of polymer and monomer at a controlled temperature sufficient only to cause orderly polymerisation without appreciable exothermal effects.

Croydon Printing Company Ltd

INJECTION OR TRANSFER MOULDING.

0163499

This invention relates to the injection or transfer moulding of polymerisable resins and relates more especially but not exclusively to accurate and reliable moulding of bases for dentures.

The construction of dentures which are retentive, comfortable and durable is a most complex task which hitherto has been exceptionally difficult to accomplish. The familiar technique of compression moulding has many shortcomings but, despite disadvantages, it remains in widespread use on account of economic factors which demand low cost and simplicity. Many sophisticated attempts have been made to improve upon this method but none has yet achieved widespread usage or acclaim. These attempts have, in the main, been directed at overcoming difficulties associated with the conversion of monomeric organic liquids to stable high molecular weight polymers and the attendant reduction in volume.

The Specifications of U.S. Patent Specification No. 2806253 and German Patent Specification No. 2312934 describe techniques for obtaining precise dental mouldings from heat polymerised acrylic resins using pressure injection methods. Both methods embrace a principle of heat gradients and directional polymerisation with rapid processing cycles.

The method disclosed in U.S. Patent Specification No. 2806253 is intended to polymerise the resin in direct contact with the surface of a mouth cast before other areas. The desired heat flow is directed by a suitable arrangement of materials of differing thermal conductivities within an enclosure for the mould.

- 2 -

A polymerisation process is employed which raises the temperature to 104.5°C in 45 minutes. German Patent Specification No. 2312934 describes another method where the enclosure for a denture mould creates a temperature gradient when it is partially immersed in boiling water. The apparatus is such that polymerisation commences at points furthest from an injection channel and as this progresses the shrinkage of the resin is intended to be conpensated by a flow of more material which enters the mould under pressure from a store. The temperature of 100°C is maintained for 35 minutes. However, the moulds are highly stressed by the apparatus and the operating conditions of this method which in practice can frequently lead to distortion or even fracture of the moulds and surface quality and impact strength of resultant mouldings leaves much to be desired.

According to the present invention, there is provided a method of making mouldings by the injection of polymerisable moulding material into a mould comprising the steps of preparing a said mould to have a mould space of a desired shape and dimensions, rendering the inner surfaces of the mould space releasable from the moulding to be made, connecting the mould space to a container of said material, applying pressure to the said material to inject the material into the mould space and elevating the temperature thereof to effect polymerisation characterised by the step of raising the temperature of said mould being a temperature rise to a value (typically 66°C) only sufficiently high to cause controlled polymerisation without appreciable exothermal effects until a desired material density has been achieved and only then finishing the polymerisation process (typically by raising the temperature of said mould to an appreciably higher temperature).

- 3 -

0163499

The invention further provides injection moulding apparatus characterised by a chamber formed between two closure members for forming and containing a mould said chamber having means for injecting moulding material in fluid form under pressure into a mould space of a mould contained in said chamber.

Preferably said chamber is formed between two mutually facing detachable closure plates spaced apart by a body extending around the sides of the mould between the closure plates and a part of said body being outwardly moveable relative to the remainder to permit the mould to be replaceably released from the internal surface of the chamber.

In order that the invention may be more clearly understood and readily carried into effect, a process for manufacturing acrylic denture bases will now be further described by way of example with reference to the accompanying drawings of which:

Figs. 1 and 2 illustrate dismantled components of a moulding apparatus

Fig. 3           illustrates an assembled apparatus

Fig. 4           illustrates a section of a part assembled apparatus and,

Fig. 5           illustrates a modified apparatus for moulding a plurality of dentures.

The method of making acrylic dentures by the lost wax process in a denture flask is well known to dental practitioners and technicians and therefore does not require to be described in detail. Briefly, a mouth impression is first reproduced in a dental stone model material and artificial teeth are set in wax to form a

0163499

replica denture.  After trial fitment of this wax denture in the mouth of the patient, it is then sealed with wax to the stone model cast whose base is set in a gypsum investment with the teeth protruding from half of a denture flask.  When the investment has hardened, the surfaces are coated with a separating medium.  The remaining half of the denture flask is filled with more gypsum investment and assembled with the first part containing the wax replica denture for moulding.  The complete denture flask is next immersed in boiling water for a short period, the two halves separated and the wax eliminated with boiling water and detergent.  All surfaces, apart from the teeth, are coated with a mould sealer prior to moulding the acrylic resin in the flask by compression.

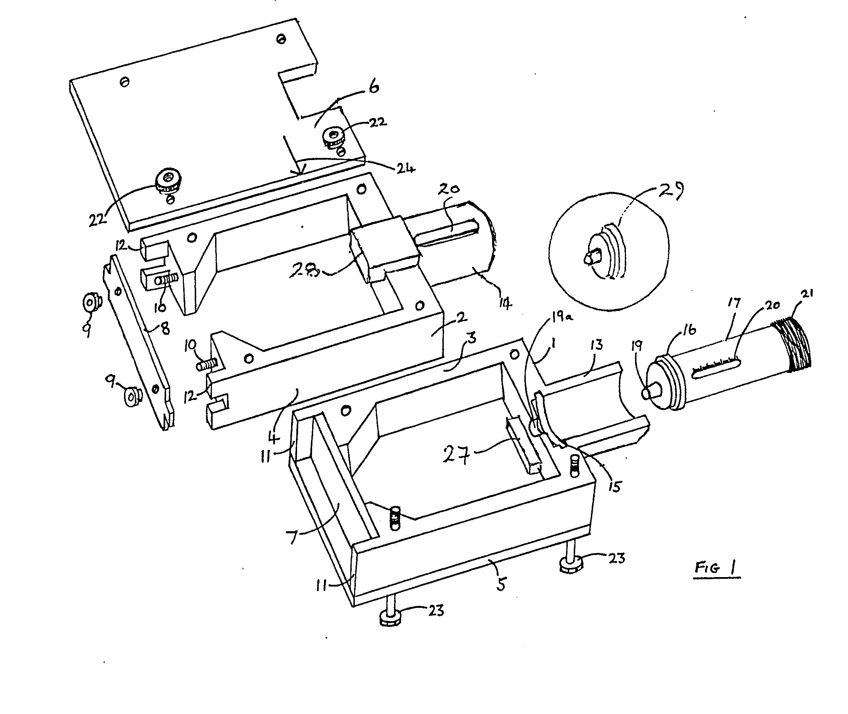

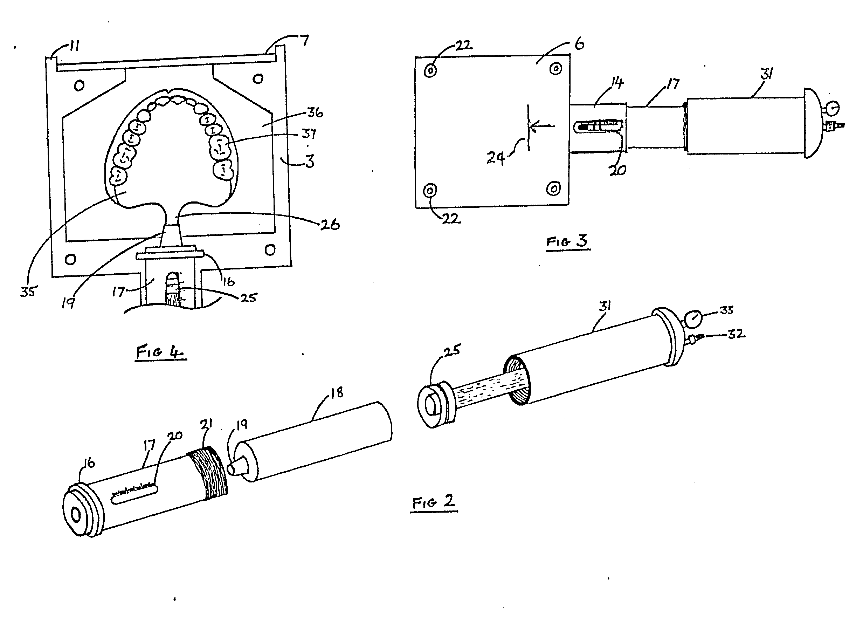

For the preferred method of moulding in accordance with the invention, the mould is made in a flask in the form of a mould container such as is shown dismantled in Figs 1 and 2.  The mould container comprises body parts 1 and 2 having side parts 3 and 4 with closely mating surfaces such that when placed together they form a box which can be closed on each side by closely fitting metal plates 5 and 6.  One end of body part 1 is closed by the vertical plate 7 set at right angles to and screwed permanently to the rigid plate 5.  The corresponding end of body part 2 is closeable by an end plate 8 that may be fitted and attached by nuts 9 and screw studs 10 following the final filling of the mould container with mould investment material through the opening between container ends 12.

The body parts 1 and 2 and side parts 3 and 4 are formed of a polymer which is slightly flexible and permits the ends 11 of body side parts 3 and the ends 12 of body side parts 4 to be slightly sprung apart manually, after removal of the closure plates, for release and easy removal of the mould. Each of body parts 1 and 2 has a neck 13 and 14, the interior of which is shaped with an annular recess 15 to receive an annular flange 16 of a cylinder housing 17 which contains an injection cylinder 18 with an injection nozzle 19 to extend into the interior of the mould container when assembled. Parts 1 and 2 also have respective inward projections 27 and 28 which act to retard temperature rise in the region of the injection nozzle. The cylinder housing 17 is provided with a window 20 having graduations against which the progressive movement of a piston 25 can be observed and measured in the injection cylinder 18 which is transparent.

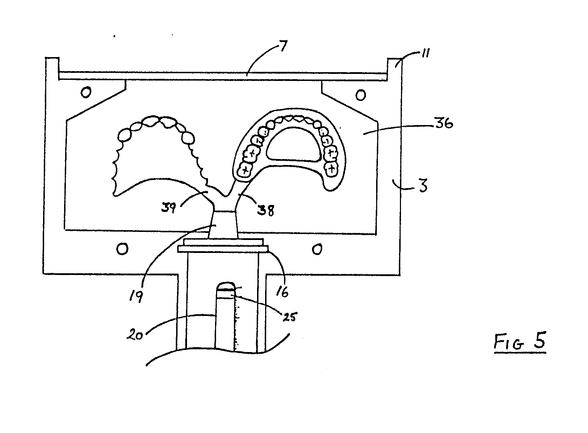

Fig. 3 shows one view of a complete assembly wherein it is to be seen that the cylinder housing 17 is assembled into the body necks 13 and 14 and a screw-on fluid pressure operable actuator 31 is attached to the threaded end 21 of the cylinder housing 17. This actuator 31 drives the piston 25 within the injection cylinder 18 when contained in the cylinder housing 17. For the moulding operation, pressure is applied initially from a compressed air line through a quick release connector and valve 32. After a desired pressure has been established by a pressure gauge 33 the connector and valve 32 can be released from the air line and the apparatus removed with retained pressure for polymerisation.

Using the body part 1 of the above described mould container, together with the closure plates 5 and 7 assembled thereto, the finally adjusted wax replica denture sealed to a stone model cast (ADA Spec. Type IV)

- 6 -                                    0163499

is invested in a low expansion gypsum mould material
which is levelled off to the upper surface of body extensions 3, whilst the wax denture and teeth are left
projecting from the surface.  This stage is illustrated
at Fig. 4 where the wax replica moulding is also shown
connected to the injection nozzle 19 by a wax connecting
sprue 26 but the sprue may be formed later if desired.
After setting, the exposed surfaces of the gypsum
investment are treated with soap as a release agent prior
to coating all wax surfaces and the artificial teeth
with a 4mm. layer of dental stone (ADA Spec. Type IV)
which is allowed to harden for 15 minutes.  The mould
container is then assembled as indicated in Fig. 1 with
a dummy nozzle (shown inset at 29) to occupy the aperture
at 19a.  It is then filled with investment whilst supported
upright with the body necks 13 and 14 downward before
the plate 8 is placed in position on studs 10.  The nuts
9 are left loosely threaded in position to allow for some
setting expansion.  The completed mould may be released
from the container after setting by removing the plates
5 and 7, 6 and 8, gently prising apart ends 11 of body
extensions 3 and ends 12 of body extensions 4 and
lifting body parts 1 and 2 a2ay from the contained
mould.  This releases the cylinder housing 17 and injection cylinder 18 from the retaining groove 15.  The mould
container may then be used to prepare further such
moulds if required.

Each mould so prepared now has the wax removed by
immersing in warm water (52°C) for 30 minutes before
separating into two halves.  The softened wax is taken out
of the mould and any residue eliminated by thoroughly
cleansing with boiling water and detergent.  If a
connecting sprue 26 has not been previously formed
in a wax, a channel can be cut with a 6mm. carbide drill in order that moulding material will flow from the injection cylinder 18 into the moulding cavity. The two mould halves or mould stones are held together and the moulding volume measured by filling the davity with water through the sprue channel from a graduated syringe. All surfaces of the mould stones are then thoroughly dried prior to coating the moulding surfaces with three layers of an alginate sealer as a moulding release agent. The mould stones are returned to the body parts 1 and 2 and the mould container re-assembled according to Fig.1 including the cylinder housing 17.

A measured quantity of a rubber grafted co-polymer of methylmethacrylate in the form of beads is mixed with a methylmethacrylate monomer, in a ratio of 3:1 by volume and transferred to the injection cylinder 18. The methylmethacrylate monomer has a suitable proportion of ethylene glycol dimetheylacrylate as ʌcross linking agent.

The excess air is expelled by condensing the material with a piston 25 and sufficient time is allowed for the beads to become at least partially dissolved in monomer. The injection cylinder is then placed with the cylinder housing 17 and the fluid pressure operable actuator 31 is screwed in position on thread 21. The air pressure within the actuator 31 is gradually raised to sufficient pressure to inject the moulding cavity with the material from the injection cylinder. The pressure is then approximately doubled to about 90 p.s.i. and the apparatus is allowed to stand for a period of five minutes to ensure complete filling of the mould. The apparatus is next disconnected from the air line whilst the quick-release connection and valve 32 ensures that the pressure is maintained and the container body is immersed in water to the mark 24 on plate 6 at a temperature, typically $66^0$,

being a temperature at which a controlled slow polymerisation is supported without any substantial rapid exother mic reaction. A progressive volume reduction is observed through the window 20 over a period, typically two hours, depending upon the moulding volume. Following completion of this volume reduction, the water temperature is raised to near boiling for a further period of one hour during which further curing takes place. In order to avoid thermal stressing of the thus moulded denture base and to ensure optimum mechanical properties the whole assembly is then cooled slowly to room temperature. The mould is then removed from the container and the investment carefully broken apart to release the denture which has an exceptionally fine surface requiring very little polishing.

Referring now to Fig. 5, it will be readily appreciated therefrom that by making the parts 1 and 2 of Fig. 1 wider and providing larger closure plates 5 and 7, 6 and 8, two denture base models may be embedded in the same mould in one mould container. Two passages 38, 39 may be provided from the single injection nozzle 19 as shown for the purpose of simultaneous production by injection moulding and polymerisation of two denture bases. The procedure is substantially as described in the foregoing for a single denture base.

As an alternative to the provision of a window 20 as shown in Figs. 3, 4 and 5, the body of the actuator 31 may be fabricated from a transparent polymer through which movement of the actuator piston within may be observed against a measuring scale as described in the foregoing in the use of the apparatus.

Whilst the method of use of the apparatus as outlined

- 9 -

0163499

in the foregoing involves immersing the mould container to a mark 24 in heated water it may be found to be more convenient, albeit possibly more expensive, to provide the apparatus with a detachable electrically heated shroud and suitable temperature regulating means for achieving and controlling the desired polymerisation temperature.

In yet another variant the plates such as 6 and 7 of Fig. 1 may be provided with contained electrical heating elements and a suitable thermo-electrically operable temperature control device.

With the exception of the plates 5, 6, 7 and 8, most of the component parts of apparatus in accordance with the invention can be designed themselves for precision injection moulding so that for quantity production of the apparatus, expensive and time-consuming machinery may largely be eliminated.

By virtue of apparatus according to the present invention and the various facets thereof, a convenient and relatively inexpensive injection moulding apparatus may be provided which not only enables a quantity of moulds successively to be produced in the same apparatus, removed for dewaxing and subsequent replacement in the mould container for moulding but it is found that stressing of the mould and the resultant moulding can be appreciably reduced.

Although the novel apparatus described herein with reference to the accompanying drawings has been designed more especially for conveniently carrying into effect the injection or transfer moulding which has been described, the apparatus is not necessarily intended to be limited to use with such a method. Indeed it is possible that other methods may in due course be developed the carrying into effect of which may particularly conveniently be achieved by the described apparatus or a variants thereof.

With the mentioned monomer and the mentioned proportions thereof with the rubber grafted copolymer of methylmethacrylate the first part of the polymerisation process is best effected at a temperature of approximately 66°C. It will be appreciated however that with alternative materials a different preferred temperature at which a rapid exothermic reaction does not occur may be selected.

By virtue of the method in accordance with the invention in which a major part of the polymerisation of the chosen monomer can be effected in a controlled manner at a temperature at which a rapid exothermic reaction does not occur, a well-fitting stable polymer denture base of high impact strength may be produced. This is believed to be the result of uniform polymerisation taking place throughout the moulding without localised faster polymerisation centres and also of the method and apparatus used therefore to permit material flow between the mould and the injection cylinder during the polymerisation process.

The impact strength, resilience and long-term dimensional stability of a denture base produced by a method in accordance with the invention is further enhanced by the novel use of a specifically chosen rubber grafted copolymer of methylmethacrylate in bead form as a denture base material. Resulting denture bases are better tolerated by the patients than hitherto.

By virtue of the moulding apparatus having a body 1, 2 formed of a polymer, the expansion characteristics

**0163499**

of which are themselves chosen to be close to those of the synthetic materials to be contained thereby undesirable stresses which may otherwise be produced in said contained materials are substantially preventable and this enhances the quality of resulting mouldings.

Although the method and apparatus of the present invention have been more particularly described in the foregoing with reference to the injection moulding of denture bases the invention is of course also applicable to precision moulding of other components for various specialised applications.

CLAIMS

1.    A method of making mouldings by the injection of
polymerisable moulding material into a mould, comprising
the steps of preparing a said mould to have a mould
space of a desired shape and dimensions rendering (if
necessary) the inner surface of the moulding space
releaseable from the moulding to be made, connecting
the mould space to a container of said material applying
pressure to said material to inject the material into
the mould space and elevating the temperature thereof
to effect polymerisation, characterised by a temperature
rise to a value (typically 66$^{o}$C in the case of some
derivatives of acrylic acid or methacrylic acid)
only sufficiently high as to cause orderly polymerisation accompanied by material flow without uncontrolled
exothermal effects and when a desired material density
has been achieved the step of finishing the polymerisation
process typically by further raising the temperature
of said mould to an appreciably higher temperature.

2.    A method as claimed in claim 1 characterised by
the said polymerisable material comprising a mixture
of a rubber grafted copolymer of methyl methacrylate
and at least one monomeric ester of acrylic or methacrylic acid.

3.    A method as claimed in claim 2, said copolymer
being initially in bead form.

4.    Apparatus for use in a method as claimed in claims
1, 2 or 3 characterised by a chamber formed between two
closure members (5,6) for forming and containing said
mould (36) said chamber having means (17, 18, 19, 31)
for injecting moulding material in fluid form under
pressure into a mould space (35) of the mould contained
in said chamber.

0163499

5. Apparatus as claimed in Claim 4, characterised by said chamber being formed between two mutually facing detachable closure plates (5,6) spaced apart by a body (1,2) extending around the sides of the mould between the closure plates and part (3,4) of said body being outwardly moveable relative to the remainder to permit the mould to be replaceably released from the internal surface of the chamber.

6. Apparatus as claimed in claim 5 characterised by said plates being made of a material of thermal conductivity which is relatively higher than that of which the body is made.

7. Apparatus as claimed in claim 5 or 6 characterised by said body (1,2) being formed of material which is resiliently flexible to permit said movement.

8. Apparatus as claimed in claims 5, 6 or 7 characterised by said body being formed of two mutually separable halves (1,2) and separately attachable means (8) for closing an opening therein between said closure plates.

9. Apparatus as claimed in claim 8 characterised by the injecting means (17) being retained between neck portions of said separable halves.

10. Apparatus as claimed in claim 9 characterised by having an inner separately insertable pressurable cylinder (18) for containing the moulding material.

11. Apparatus as claimed in claims 9 or 10 characterised by the injecting means having a pressure operable piston actuator (31) and a cut-off valve (32) whereby the actuator once pressurised from a source may be released from said source during the polymerisation.

- 3 -

0163499

12. Apparatus as claimed in any of claims 4 to 11 characterised by said apparatus having a transparent portion (17) enabling material volume to be visually observed.

13. Apparatus as claimed in any of claims 4 to 12 characterised by said apparatus being such as to accomodate a plurality of mould spaces into which said material is injected from a single container.

14. Apparatus as claimed in any of claims 4 to 13 characterised by an electrically energiseable heating shroud.

15. Apparatus as claimed in claim 14 provided with thermoelectrically operable temperature control means.

16. Apparatus substantially as described herein with reference to Figs. 1, 2 and 3 or Fig. 5 of the accompanying drawings.

17. A method of making mouldings substantially as described herein.

18 A method of injection moulding denture bases using method or apparatus in accordance with any preceeding claim.

19. Moulding apparatus comprising a chamber formed between two closure members for forming and containing a mould said chamber having means for injection moulding material in fluid form under pressure into a said mould contained therein from externally thereof characterised by said chamber being formed of two mutually facing detachable closure plates (5,6) spaced apart by a body (1,2) extending around the sides of a said mould when contained therein and one side (11,12) of said body being so relatively outwardly moveable relative to the remainder as to permit the mould to be replaceably released from intimate contact with the internal surface of the chamber.

FIG 1

0163499

Fig 3

Fig 2

Fig 4

0163499

Fig 5